# EUROPÄISCHE PATENTSCHRIFT

(11) **EP 0 794 372 B1**
(45) Veröffentlichungstag und Bekanntmachung des Hinweises auf die Patenterteilung: **13.06.2001**
(21) Anmeldenummer: 97103318.8
(22) Anmeldetag: 28.02.1997
(51) Int. Cl.: F16K 31/60

(54) **Hebelventil**
Lever valve
Soupape à levier

(30) Priorität: 06.03.1996 DE 19608594
(43) Veröffentlichungstag der Anmeldung: 10.09.1997
(73) Patentinhaber: Friedrich Grohe AG & Co. KG, 58675 Hemer (DE)
(72) Erfinder: Hannemann, Fred, 04916 Herzberg (DE); Weiss, Roland, 58640 Iserlohn (DE)

(56) Entgegenhaltungen:
- EP-A- 0 282 775
- EP-A- 0 470 647
- DE-A- 2 808 349
- DE-A- 4 343 572
- DE-U- 8 704 009
- US-A- 3 301 580

## Beschreibung

Die Erfindung betrifft ein Hebelventil mit einem als Kopfteil ausgebildeten Betätigungshebel oder Betätigungsbügel, der einen von einer Haube umgebenen Ansatz trägt, in den ein aus dem Ventilgehäuse vorstehender Stellhebel einführbar und mit einem radial unterhalb der Haube zugänglichen Befestigungsmittel in der Stecklage fixierbar ist.
Eine derartige Einrichtung war aus der deutschen Offenlegungsschrift DE 28 08 349 A bekannt. Hierbei ist als Befestigungsmittel ein Gewindestift vorgesehen, der unter der Haube zugängig ist. Diese von außen sichtbare Befestigungsart wird vielfach als nachteilig angesehen. Außerdem war es aus der deutschen Offenlegungsschrift DE 43 43 572 A bekannt, den Gewindestift so anzuordnen, daß er durch eine Radialbohrung zugänglich ist. Die sichtbare Radialbohrung kann sich hierbei aber ebenfalls störend auf den geschmacklichen Eindruck des im Blickfeld des Benutzers liegenden Kopfteils auswirken.

Der Erfindung liegt die Aufgabe zugrunde, bei dem im Oberbegriff des Anspruchs 1 angegebenen Ventil das Kopfteil zu verbessern.
Diese Aufgabe wird erfindungsgemäß mit den Merkmalen des Anspruchs 1 gelöst.
Weitere Ausgestaltungen der Erfindung sind in den Ansprüchen 2 bis 9 angegeben.

Mit den vorgeschlagenen Maßnahmen wird erreicht, daß die seitlich angeordnete Befestigungsschraube in ästhetisch ansprechender Weise von der vorzugsweise mit Zierelementen versehenen Abdeckhaube bzw. von einem Zierring verdeckt wird. Hiermit wird gleichzeitig erreicht, daß die Befestigungsart des als Hebelkopf wirkenden Kopfstücks auf dem Ventil nicht sichtbar ist, so daß auch ein unbefugtes Demontieren erschwert wird.

Ein Ausführungsbeispiel der Erfindung ist in der Zeichnung dargestellt und wird im folgenden näher beschrieben. Es zeigt
- Figur 1: ein zum Teil dargestelltes Einhebelmischventil mit einem Kopfteil, geschnitten in der Schnittebene I der Figur 2;
- Figur 2: den in Figur 1 dargestellten Kopfteil in der Schnittebene II;
- Figur 3: das in Figur 1 dargestellte Einhebelmischventil mit abgesenkter Abdeckhülse;
- Figur 4: das in Figur 3 gezeigte Einhebelmischventil mit abgezogenem Kopfstück.

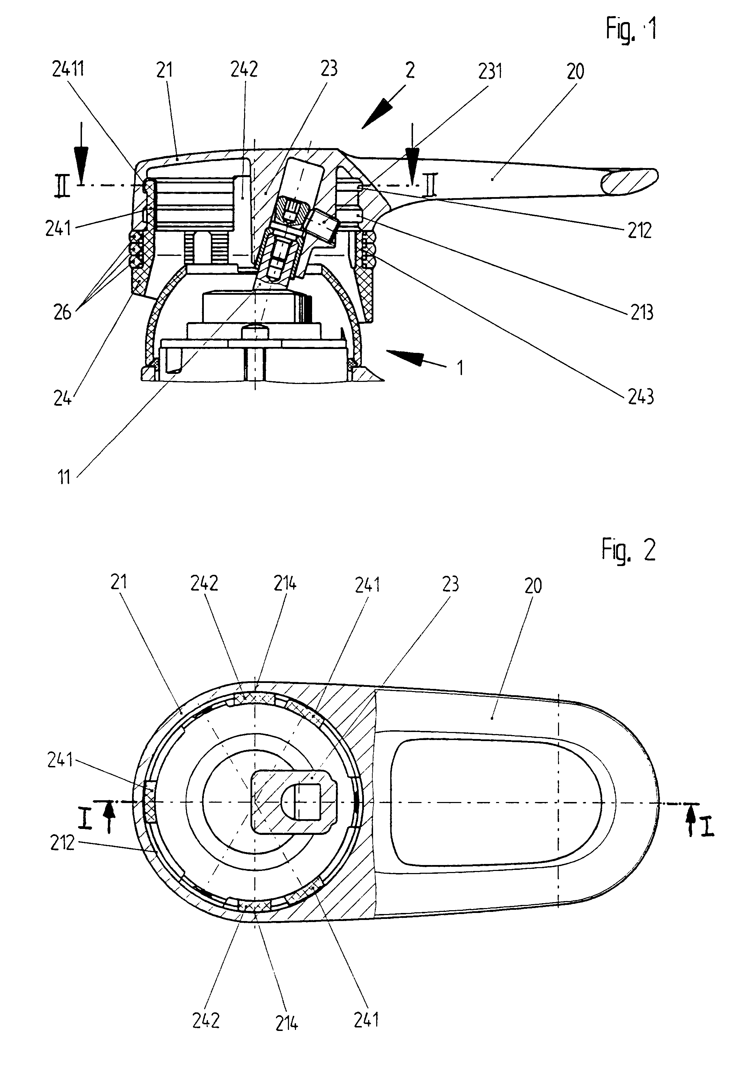

Das in Figur 1 und 2 dargestellte Ventil 1 ist als Einhebelmischventil ausgebildet, wobei das Ventil 1 nur zum Teil dargestellt ist. An einem kugelförmigen Endbereich des Ventils 1 ist ein Stellhebel 11 herausgeführt. Auf dem Stellhebel 11 ist ein Kopfteil 2, bestehend aus einem bügelförmigen Betätigungshebel 20, einer Haube 21, einem Ansatz 23 und einer Abdeckhülse 24. Der Kopfteil 2 ist dabei mit dem Ansatz 23 auf den Stellhebel 11 aufgeschoben und in seiner Steckposition mit einem Befestigungsmittel 231 in Form eines Gewindestiftes gesichert. Das Befestigungsmittel 231 ist dabei in dem Ansatz 23 axial so angeordnet, daß es unterhalb der Haube 21 radial zugänglich ist. Unterhalb der Haube 21 ist die Abdeckhülse 24 angeordnet, die den Zugang zum Befestigungsmittel 231 verdeckt. Am Außenmantel der Abdeckhülse 24 sind in einer ringförmigen Ausnehmung 243 drei Zierringe 26 angeordnet. Die Ausnehmung 243 ist dabei so dimensioniert, daß die drei Zierringe 26 axial zwischen der Stirnseite der Haube 21 und der gegenüberliegenden Schulter der Ausnehmung 243 axial festliegend gehalten werden.

An der Abdeckhülse 24 sind drei axial vorstehende symmetrisch angeordnete federnde Zungen 241 ausgebildet, wie es insbesondere aus Figur 2 der Zeichnung zu entnehmen ist. Die federnden Zungen 241 weisen am Endbereich nach außen vorstehende Nasen 2411 auf, mit denen sie in umlaufenden Ringnuten 212,213 an der Innenwandung der Haube einfassen können. Neben den federnden Zungen 241 sind zwei diametral gegenüberliegend angeordnete, axial vorspringende Führungselemente 242 an der Abdeckhülse 24 ausgebildet, wie es insbesondere aus Figur 2 zu entnehmen ist. Die Führungselemente 242 sind jeweils von einer Längsnut 214 in der Innenwandung der Haube 21 aufgenommen, so daß sie eine verdrehungssichere Führung der Abdeckhülse 24 in der Haube 21 gewährleisten.
Die Abdeckhülse 24 ist aus Kunststoff im Spritzgußverfahren hergestellt.

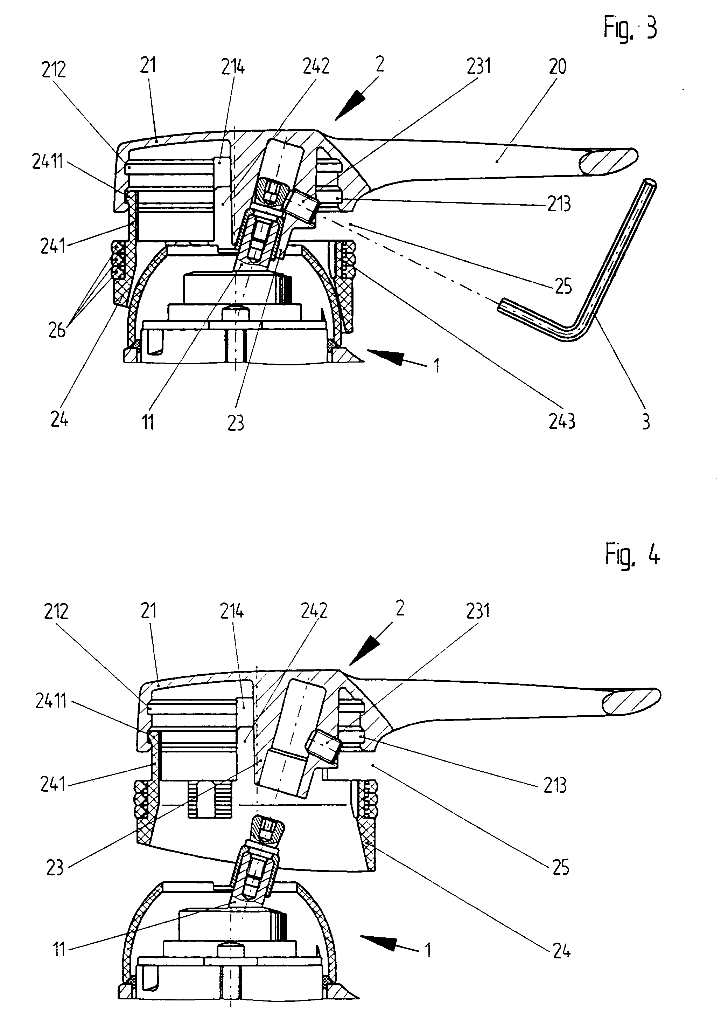

Die Zusammenmontage des Kopfteils 2 mit dem Ventil 1 kann in folgender Weise erfolgen:
Der einstückig mit der Haube 21 und dem Ansatz 23 ausgebildete Betätigungshebel 20 ist vorzugsweise aus Metall hergestellt und wird mit der aus Kunststoff hergestellten Abdeckhülse 24 zusammengefügt, wobei die Führungselemente 242 von den Längsnuten 214 aufgenommen werden und die federnden Zungen 241 mit den Nasen 2411 in die Ringnut 213 einrasten. In dieser Position der Abdeckhülse 24 ist ein Freiraum 25 zwischen der unteren Stirnseite der Haube 21 und der oberen Stirnseite der Abdeckhülse 24 gebildet. Der Freiraum 25 kann dabei so bemessen sein, daß die als Befestigungsmittel 231 vorgesehene Stiftschraube in die Radialgewindebohrung des Ansatzes 23 einschraubbar ist. Er muß aber zumindest so groß ausgelegt sein, daß ein Werkzeug 3, beispielsweise ein Innensechskantschlüssel, einbringbar ist. Durch die Anordnung der Ringnut 213 wird eine Vormontage des Kopfteils und ein einfaches Fügen in der Endmontage ermöglicht, wie es aus Figur 4 ersichtlich ist.
Das so komplettierte Kopfteil 2 kann nunmehr als Einheit mit dem Ansatz 23 auf den Stellhebel 11 aufgesteckt werden, wie es aus Figur 3 der Zeichnung ersichtlich ist, und in der Stecklage mit dem Befestigungsmittel 231 mit Hilfe des radial durch den Freiraum 25 einbringbaren Werkzeugs 3 gesichert werden. Hiernach wird die Abdeckhülse 24 axial in Richtung auf die untere Stirnseite der Haube 21 verschoben, wobei die federnden Zungen 241 radial ausgelenkt werden und nach der Anlage der Stirnseite der Abdeckhülse 24 mit den drei Zierringen 26 an der unteren Stirnseite der Haube 21 schnappen die Nasen 2411 der Zungen 241 in die obere Ringnut 212 ein und halten die Abdeckhülse 24 in dieser Position.
Mit den Zierringen 26 wird ein harmonischer Übergang zwischen dem Außenmantel der Haube 21 und der Abdeckhülse 24 gewährleistet und das Befestigungsmittel 231 so verdeckt, daß die Befestigungsart von außen nicht ohne weiteres ersichtlich ist.

Bei dem vorstehend dargestellten Ausführungsbeispiel ist die Abdeckhülse 24 mit Hilfe von federnden Zungen 241 und Führungselementen 242 mit der Haube 21 verbunden. Selbstverständlich kann anstatt dieser Befestigungsmittel die Abdeckhülse auch mit einem Gewindeansatz oder Teilen von einem Gewindeansatz versehen sein, mit dem sie in ein an der Innenwandung der Haube ausgebildetes entsprechendes Muttergewinde einschraubbar ist. Auch kann anstatt eines Gewindes eine Bajonettverbindung vorgesehen sein. Diese Ausbildungen erfordern jedoch zumindest eine begrenzte Drehbewegung der Abdeckhülse zur Abdeckhaube, was unerwünscht sein kann.

## Patentansprüche

1. Hebelventil mit einem als Kopfteil (2) ausgebildeten Betätigungshebel (20) oder Betätigungsbügel, der einen von einer Haube (21) umgebenen Ansatz (23) trägt, in den ein aus dem Ventilgehäuse vorstehender Stellhebel (11) einführbar und mit einem radial unterhalb der Haube (21) zugänglichen Befestigungsmittel (231) in der Stecklage fixierbar ist, dadurch gekennzeichnet, daß an der Haube (21) eine Abdeckhülse (24) axial bewegbar befestigt ist, derart, daß in einer ersten Position ein Freiraum (25) zwischen der Haube (21) und der Abdeckhülse (24) gebildet ist, durch den wenigstens ein Werkzeug (3) zur Betätigung des Befestigungsmittels (231) einbringbar ist, während in einer zweiten Position die Abdeckhülse (24) an der Haube (21) anliegt, wodurch das Befestigungsmittel (231) abgedeckt ist.

2. Hebelventil nach Anspruch 1, dadurch gekennzeichnet, daß die Abdeckhülse (24) am Mantelbereich der Haube (21) befestigt ist.

3. Hebelventil nach Anspruch 1 oder 2, dadurch gekennzeichnet, daß im Bereich der einen Stirnseite der Abdeckhülse (24) axial vorstehende federnde Zungen (241) ausgebildet sind, die in der Stecklage an der Innenseite der Haube (21) in eine oder mehrere Ringnuten (212,213) einfassen, und die Abdeckhülse (24) an der Haube (21) halten.

4. Hebelventil nach Anspruch 3, dadurch gekennzeichnet, daß zwei axial zueinander versetzt angeordnete Ringnuten (212,213) in der Haube (21) ausgebildet sind, so daß die Abdeckhülse (24) von der einen Ringnut (212) in Anlageposition zur Haube (21), von der anderen Ringnut (213) in einer einen Freiraum (25) bildenden Position zur Haube (21) gehalten ist.

5. Hebelventil nach Anspruch 3 oder 4, dadurch gekennzeichnet, daß drei federnde Zungen (241) vorgesehen und einstückig mit der Abdeckhülse (24) ausgebildet sind.

6. Hebelventil nach wenigstens einem der Ansprüche 1 bis 5, dadurch gekennzeichnet, daß in der Innenwandung der Haube (21) eine oder mehrere Längsnuten (214) ausgebildet sind, in die ein oder mehrere entsprechend axial vorstehende Führungselemente (242) der Abdeckhülse (24) einfassen und eine drehfeste Verbindung zwischen der Haube (21) und der Abdeckhülse (24) herstellen.

7. Hebelventil nach Anspruch 6, dadurch gekennzeichnet, daß zwei diametral gegenüberliegend angeordnete Führungselemente (242) einstückig mit der Abdeckhülse (24) ausgebildet sind.

8. Hebelventil nach wenigstens einem der Ansprüche 1 bis 7, dadurch gekennzeichnet, daß an der der Haube (21) zugekehrten Seite die Abdeckhülse (24) am Außenmantel eine ringförmige Ausnehmung (243) zur Aufnahme eines oder mehrerer Zierringe (26) vorgesehen ist, wobei die Ausnehmung (243) so dimensioniert ist, daß die Zierringe (26) bei Anlage der Abdeckhülse (24) an der Haube (21) axial festliegend gehalten sind.

9. Hebelventil nach wenigstens einem der Ansprüche 1 bis 8, dadurch gekennzeichnet, daß die Abdeckhülse (24) aus Kunststoff hergestellt ist.

## Claims

1. Lever-operated valve having an operating lever (20) or stirrup-shaped handle in the form of a top part (2), which operating lever carries an extension (23) enclosed by a domed cover (21), into which extension an adjusting lever (11) projecting out of the valve housing can be introduced and can be fixed in the inserted position by means of a fixing means (231) accessible radially below the domed cover (21), characterised in that a covering sleeve (24) is secured to the domed cover (21) so as to be axially movable, so that, in a first position, between the domed cover (21) and the covering sleeve (24) there is formed a clearance (25) through which at least one tool (3) is insertable for operation of the fixing means (231), whilst in a second position the covering sleeve (24) abuts the domed cover (21), consequently covering the fixing means (231).

2. A lever-operated valve according to claim 1, characterised in that the covering sleeve (24) is secured to the lateral surface region of the domed cover (21).

3. A lever-operated valve according to claim 1 or 2, characterised in that in the region of one end face of the covering sleeve (24) there are formed axially projecting resilient tongues (241), which, in the inserted position, engage on the inside of the domed cover (21) in one or more annular grooves (212, 213), and hold the covering sleeve (24) onto the domed cover (21).

4. A lever-operated valve according to claim 3, characterised in that two annular grooves (212, 213) arranged axially spaced with respect to one another are formed in the domed cover (21), so that the covering sleeve (24) is held by one annular groove (212) in a position in which it engages with the domed cover (21) and is held by the other annular groove (213) in a position in relation to the domed cover (21) forming a clearance (25).

5. A lever-operated valve according to claim 3 or 4, characterised in that three resilient tongues (241) are provided, and are of integral construction with the covering sleeve (24).

6. A lever-operated valve according to at least one of claims 1 to 5, characterised in that in the inner wall of the domed cover (21) there are formed one or more longitudinal grooves (214), in which one or more correspondingly axially projecting guide elements (242) of the covering sleeve (24) engage and create a non-rotatable connection between the domed cover (21) and the covering sleeve (24).

7. A lever-operated valve according to claim 6, characterised in that two diametrically opposed guide elements (242) are of integral construction with the covering sleeve (24).

8. A lever-operated valve according to at least one of claims 1 to 7, characterised in that, on its side facing the domed cover (21), the covering sleeve (24) is provided on its outer surface with an annular recess (243) for receiving one or more decorative rings (26), the dimensions of the recess (243) being such that the decorative rings (26) are held axially fixed when the covering sleeve (24) is engaged with the domed cover (21).

9. A lever-operated valve according to at least one of claims 1 to 8, characterised in that the covering sleeve (24) is manufactured from plastics material.

## Revendications

1. Robinet à manette comportant une manette d'actionnement (20) en forme de tête (2) ou d'étrier d'actionnement portant un prolongement (23) entouré par un capot (21) dans lequel s'introduit un levier d'actionnement (11) dépassant du corps du robinet, et un moyen de fixation (231) accessible radialement sous le capot (21) pour être bloqué en position engagée,
caractérisé en ce que
le capot (21) porte une jupe (24) mobile axialement de façon que, dans une première position, elle libère un espace libre (25) entre le capot (21) et la jupe (24), espace à travers lequel on peut introduire au moins un outil (3) pour actionner le moyen de fixation (231) et que, dans une seconde position, la jupe (24) s'applique contre le capot (21) et recouvre le moyen de fixation (231).

2. Robinet à manette selon la revendication 1,
caractérisé en ce que
la jupe (24) est fixée au niveau de l'enveloppe du capot (21).

3. Robinet à manette selon l'une quelconque des revendications 1 ou 2,
caractérisé en ce qu'
au niveau d'une face frontale de la jupe (24), il y a des languettes (241) élastiques, axialement en saillie, qui, en position engagée, entourent le côté intérieur du capot (21) par une ou plusieurs rainures annulaires (212, 213) et tiennent la jupe (24) sur le capot (21).

4. Robinet à manette selon la revendication 3,
caractérisé par
deux rainures annulaires (212, 213) réalisées avec un décalage axial dans le capot (21) pour que la jupe (24) puisse être tenue, par l'une des rainures annulaires (212), en positions d'application contre le capot (21) et, par l'autre rainure annulaire (213), dans une position par rapport au capot (21) qui libère l'espace libre (25).

5. Robinet à manette selon l'une quelconque des revendications 3 ou 4,
caractérisé par
trois languettes élastiques (241) qui font corps avec la jupe (24).

6. Robinet à manette selon l'une quelconque des revendications 1 à 5,
caractérisé en ce que
la paroi intérieure du capot (21) comporte une ou plusieurs rainures longitudinales (214) dans lesquelles viennent prendre un ou plusieurs éléments de guidage (242) venant axialement en saillie et appartenant à la jupe (24), éléments de guidage qui réalisent une liaison solidaire en rotation entre le capot (21) et la jupe (24).

7. Robinet à manette selon la revendication 6,
caractérisé par
deux éléments de guidage (242) diamétralement opposés et faisant corps avec la jupe (24).

8. Robinet à manette selon l'une quelconque des revendications 1 à 7,
caractérisé en ce que
de son côté tourné vers le capot (21), la jupe (24) comporte, sur l'enveloppe extérieure, une cavité annulaire (243) pour recevoir un ou plusieurs anneaux de décoration (26), la cavité (243) étant dimensionnée pour que les anneaux décoratifs (26) soient tenus ou bloqués axialement lors de la venue en appui de la jupe (24) contre le capot (21).

9. Robinet à manette selon l'une quelconque des revendications 1 à 8,
caractérisé en ce que
la jupe (24) est en matière plastique.
